(19) Europäisches Patentamt
European Patent Office
Office européen des brevets

(11) **EP 2 390 206 A1**

(12) **EUROPÄISCHE PATENTANMELDUNG**

(43) Veröffentlichungstag:
**30.11.2011 Patentblatt 2011/48**

(51) Int Cl.:
***B65G 39/06*** (2006.01)

(21) Anmeldenummer: **11004041.7**

(22) Anmeldetag: **16.05.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **25.05.2010 DE 202010007189 U**

(71) Anmelder: **RULMECA GERMANY GmbH**
**06449 Aschersleben (DE)**

(72) Erfinder: **Brumme, Bernd**
**04129 Leipzig (DE)**

(74) Vertreter: **Müller-Boré & Partner**
**Patentanwälte**
**Grafinger Straße 2**
**81671 München (DE)**

(54) **Tragrolle und Fördervorrichtung**

(57)    Ein Aspekt der vorliegenden Erfindung betrifft eine Tragrolle (1), insbesondere für Fördergurte, umfassend:
- einen Tragrollenmantel (4) mit einer Tragrollenmantelinnenfläche (15);
- eine erste Lagerhalteeinrichtung (5) und eine zweite Lagerhalteeinrichtung (6), welche an entlang einer Längsrichtung (L) voneinander beabstandeten Endbereichen des Tragrollenmantels (4) angeordnet sind;
- zumindest eine Dämpfungseinrichtung (3a,3b,3c), welche von der ersten und zweiten Lagerhalteeinrichtung (5,6) beabstandet angeordnet ist und entlang der Längsrichtung (L) zumindest bereichsweise einen vorbestimmten Anpreßdruck an die Tragrollenmantelinnenfläche (15) anlegt
sowie eine Fördervorrichtung mit zumindest einer obigen Tragrolle (1).

Fig. 1

EP 2 390 206 A1

**Beschreibung**

Die vorliegende Erfindung betrifft eine Tragrolle sowie eine Fördervorrichtung mit zumindest einer Tragrolle.

Tragrollen werden in Fördervorrichtungen eingesetzt, um beispielsweise Fördergurte von Förderbandanlagen oder Stückgut reibungsarm zu tragen. Die Tragrollen sind in der Regel als Hohlkörper ausgebildet, um die Masse sowie das Trägheitsmoment der Tragrollen gering zu halten, so daß die Tragrollen unter geringem Kraftaufwand in Drehung versetzt oder gebremst werden können. Jedoch wirkt der Hohlkörper der Tragrolle als Resonanzkörper, welcher im betriebsgemäßem Gebrauch insbesondere in Eigenschwingungen versetzt sein kann. Die dadurch bedingten Schallemissionen können bei betriebsgemäßen Gebrauch der Tragrolle bzw. der Fördervorrichtung zu einer Beeinträchtigung der Umgebung der Tragrolle bzw. der Fördervorrichtung durch Schallimmissionen führen.

Es ist daher eine Aufgabe der vorliegenden Erfindung eine geräuschgeminderte Förderung von Fördergut zu ermöglichen. Diese Aufgabe wird durch die Gegenstände der unabhängigen Ansprüche gelöst. Bevorzugte Ausführungsformen sind Gegenstand der abhängigen Ansprüche.

Tragrolle gemäß einem Aspekt

Ein Aspekt der vorliegenden Erfindung betrifft eine Tragrolle, insbesondere für Fördergurte, umfassend:

- einen Tragrollenmantel mit einer Tragrollenmantelinnenfläche;
- eine erste Lagerhalteeinrichtung und eine zweite Lagerhalteeinrichtung, welche an entlang einer Längsrichtung voneinander beabstandeten Endbereichen des Tragrollenmantels angeordnet sind;
- zumindest eine Dämpfungseinrichtung, welche von der ersten und zweiten Lagerhalteeinrichtung beabstandet angeordnet ist und entlang der Längsrichtung L zumindest bereichsweise einen vorbestimmten Anpreßdruck P an die Tragrollenmantelinnenfläche anlegt.

Vorteilhafterweise werden Schwingungen des Tragrollenmantels dadurch reduziert, daß die zumindest eine Dämpfungseinrichtung zumindest bereichsweise einen vorbestimmten Anpreßdruck P an die Tragrollenmantelinnenfläche anlegt. In Abhängigkeit von dem vorbestimmten Anpreßdruck P kann die Amplitude, mit welcher der Tragrollenmantel schwingen kann, vorteilhafterweise reduziert werden. Dabei wird die Amplitude der Schwingung des Tragrollenmantels geringer, je größer der Anpreßdruck P ist. Aufgrund der Reduzierung der Schwingung des Tragrollenmantels kann vorteilhafterweise die Schallemission der Tragrolle, welche durch diese Schwingung verursacht wird, reduziert werden, so daß der bei betriebsgemäßem Gebrauch der Tragrolle in der Umgebung meßbare Schalldruckpegel vorteilhafterweise gesenkt werden kann. Mit Hilfe der erfindungsgemäßen Tragrolle können somit strengere Anforderungen an den Schallimmissionsschutz erfüllt werden.

Der Tragrollenmantel besteht aus einem starren Material wie beispielsweise Stahlblech, Eisen oder Kunststoff, wobei die Stärke des Tragrollenmantels bzw. die Festigkeit des Tragrollenmantelmaterials an die mechanischen Belastungen angepaßt sind, welche beim betriebsgemäßen Gebrauch der Tragrolle auftreten. Der Tragrollenmantel ist in der Regel hohlzylindrisch bzw. rohrförmig ausgebildet, so daß die Tragrollenmantelinnenfläche sowie eine Tragrollenmantelaußenfläche in der Regel als Zylindermantelfläche ausgebildet sind. Abweichend davon kann der Tragrollenmantel auch tonnenförmig, kegelförmig, doppelkegelförmig oder allgemein rotationssymmetrisch zu einer Mittelachse, welche sich entlang der Längsrichtung L erstreckt, ausgebildet sein.

Der Tragrollenmantel weist zwei voneinander beabstandete Endbereiche auf, welche insbesondere an den gegenüberliegenden Enden des Tragrollenmantels angeordnet sind. An den Endbereichen des Tragrollenmantels sind eine erste und zweite Lagerhalteeinrichtung angeordnet. Die erste Lagerhalteeinrichtung und/oder die zweite Lagerhalteeinrichtung können im Bereich der Endbereiche des Tragrollenmantels mit dem Tragrollenmantel lösbar oder unlösbar verbunden sein. Beispielsweise können die erste und/oder zweite Lagerhalteeinrichtung mit dem Tragrollenmantel verschweißt, vernietet, verschraubt, verlötet, verbördelt usw. sein.

Bevorzugt weisen die erste und zweite Lagerhalteeinrichtung jeweils einen Lagersitz auf, in welchen ein zugeordnetes Tragrollenlager angeordnet werden kann bzw. anordenbar ist. Bevorzugt kann das zugeordnete Tragrollenlager innerhalb des Lagersitzes der ersten bzw. zweiten Lagerhalteeinrichtung durch eine Preßpassung befestigt sein. Weiter bevorzugt ist das zugeordnete Tragrollenlager mit der ersten bzw. zweiten Lagerhalteeinrichtung unlösbar verbunden, beispielsweise durch Verschweißen, Verschrauben, Vernieten usw. Die Tragrollenlager sind bevorzugt ausgebildet, um mit einer Achse oder einem zugeordneten Achsstummel verbunden zu sein, so daß der Tragrollenmantel um diese Achse bzw. Achsstummeln drehbar gelagert ist.

Die zumindest eine Dämpfungseinrichtung legt zumindest bereichsweise einen vorbestimmten Anpreßdruck P an die Tragrollenmantelinnenfläche an. Mit anderen Worten ist die zumindest eine Dämpfungseinrichtung innerhalb des von dem Tragrollenmantel definierten Volumen angeordnet, um einen von dem Inneren des Tragrollenmantels zum Äußeren des Tragrollenmantels gerichteten Anpreßdruck P auf die Tragrollenmantelinnenfläche auszuüben. Bevorzugt wirkt der Anpreßdruck P in eine Richtung, welche im wesentlichen senkrecht zu Längsrichtung L beziehungsweise senkrecht zur Tragrollenmantelinnenfläche steht. Der Begriff "im wesentlichen" in Bezug auf Richtungsangaben kann eine geringfügige Abweichung von einer Sollrichtung beschreiben, insbesondere eine Abweichung von weniger als etwa 10° bevorzugt von weniger als etwa 5°, insbesondere eine Abweichung im Rahmen der Herstellungsgenauigkeit oder der Meßgenauigkeit. Der Begriff "im wesentlichen" umfaßt ebenfalls den Begriff "identisch", das heißt, ohne Abweichung von einer Sollrichtung.

Der vorbestimmte Anpreßdruck P, mit welchem die zumindest eine Dämpfungseinrichtung gegen die Tragrollenmantelinnenfläche preßt, ist vorzugsweise größer als etwa 10 kPa (etwa 0,1 bar), weiter vorzugsweise größer als etwa 100 kPa (etwa 1 bar) und insbesondere größer als etwa 1000 kPa (etwa 10 bar).

Der von der zumindest einen Dämpfungseinrichtung angelegte Anpreßdruck P wird vorzugsweise durch eine elastische Vorspannung der zumindest einen Dämpfungseinrichtung erzeugt. Bevorzugt ist dazu die zumindest eine Dämpfungseinrichtung relativ zu dem starren Tragrollenmantel flexibel ausgebildet und in einem elastisch verformten Zustand in bzw. an dem Tragrollenmantel angeordnet. Der Begriff "flexibel" kann eine plastische und/oder elastische Verformbarkeit und/oder eine Rückstellfähigkeit der zumindest einen Dämpfungseinrichtung umfassen.

Unter den Begriffen "flexibel" und "starr" werden im Sinne dieser Anmeldung folgende mechanische Materialeigenschaften verstanden, die im wesentlichen durch den Elastizitätsmodul E und Schermodul G quantifiziert werden können. Sowohl ein flexibles als auch ein starres Material können im wesentlichen elastisch als auch plastisch verformbar sein. Unter einer elastischen Verformung wird die geometrische Verformung eines rückstellfähigen Körpers durch eine einwirkende Kraft bzw. mechanische Spannung (Kraft pro Fläche) verstanden, die im wesentlichen vollständig reversibel ist, wenn die Kraft bzw. mechanische Spannung nicht mehr auf den Körper wirkt, so daß der Körper wieder seine ursprüngliche Gestalt annimmt. Ein flexibler Körper zeichnet sich im Gegensatz zu einem relativ dazu starren Körper, oder kurz starren Körper, dadurch aus, daß der Elastizitätsmodul $E_f$ und/oder der Schermodul $G_f$ des flexiblen Körpers, z.B. der Dämpfungseinrichtung, kleiner sind als der Elastizitätsmodul $E_s$ und/oder der Schermodul $G_s$ des starren Körpers, z.B. des Tragrollenmantels. Mit anderen Worten wird ein flexibler Körper (z.B. die Dämpfungseinrichtung) bei Einwirkung einer gleich großen Kraft bzw. mechanischen Spannung stärker geometrisch verformt als ein starrer Körper (z.B. der Tragrollenmantel).

Weiter bevorzugt ist das Verhältnis $E_s/E_f$ und/oder $G_s/G_f$ größer als etwa 1,5, besonders bevorzugt größer als etwa 2, oder größer als etwa 5 oder größer als etwa 10, insbesondere größer als etwa 50 oder größer als etwa 100. Bevorzugt ist der Schermodul $G_f$ z.B. der Dämpfungseinrichtung kleiner als $10^9$ N/m$^2$, weiter bevorzugt kleiner als $10^8$N/m$^2$, besonders bevorzugt kleiner als $10^7$N/m$^2$ und insbesondere kleiner als $5 \times 10^6$ N/m$^2$. Bevorzugt ist der Schermodul $G_s$ des Tragrollenmantels größer als etwa $10^7$ N/m$^2$ oder größer als $10^8$ N/m$^2$, besonders bevorzugt größer als $10^9$ N/m$^2$ und insbesondere größer als $5 \times 10^9$ N/m$^2$.

Die Erfindung hat erkannt, daß eine vollflächige Auskleidung der Tragrollenmantelinnenfläche durch eine Dämpfungseinrichtung zur Erzielung einer hinreichenden Reduzierung der Schallemission der Tragrolle nicht notwendig ist, sondern ein bereichsweises Anlegen eines Anpreßdrucks P mittels zumindest einer Dämpfungseinrichtung ausreichend ist. Insbesondere ist die im Bereich der Endbereiche des Tragrollenmantels und der Lagerhalteeinrichtungen erzeugte Schallemission im Gegensatz zu der in einem mittigen Bereich zwischen dem Endbereichen des Tragrollenmantels erzeugte Schallemission vergleichsweise gering. Daher kann die zumindest eine Dämpfungseinrichtung vorteilhafterweise von der ersten und zweiten Lagerhalteeinrichtung beabstandet angeordnet sein. Der Vorteil ergibt sich insbesondere in einem vereinfachten Verfahren zur Herstellung einer Tragrolle, wobei nach dem Bereitstellen des Tragrollenmantels in einem nachfolgenden Schritt die zumindest eine Dämpfungseinrichtung im Inneren des Tragrollenmantels angeordnet wird. Nach dem Anordnen der zumindest einen Dämpfungseinrichtung können die erste und zweite Lagerhalteeinrichtung an den Endbereichen des Tragrollenmantels angeordnet werden, wobei die Lagerhalteeinrichtungen insbesondere zumindest bereichsweise in das Innere des Tragrollenmantels eindringen. Vorteilhafterweise wird die zumindest eine Dämpfungseinrichtung durch die Beabstandung von der ersten und zweiten Lagerhalteeinrichtung durch diese nicht in ihrer Position verschoben, wodurch sich veränderte Dämpfungseigenschaften bezüglich des Tragrollenmantels ergeben würden. Weiter vorteilhafterweise können die Lagerhalteeinrichtungen mit dem Tragrollenmantel verschweißt werden, ohne daß die beim Verschweißen erzeugte Wärme die zumindest eine Dämpfungseinrichtung beschädigen würde.

Vorzugsweise umfaßt die Tragrolle eine Achse, welche sich entlang der Längsrichtung L durch eine Achsdurchführöffnung der zumindest einen Dämpfungseinrichtung hindurch erstreckt. Bevorzugt umfaßt die Tragrolle eine durchgehende Achse, auf welcher sich der Tragrollenmantel über die beiden Lagerhalteeinrichtungen und den zugeordneten Tragrollenlagern abstützt. Dabei kann sich die Achse entlang der Längsrichtung L durch den Tragrollenmantel hindurch erstrecken, wobei bevorzugt die Achse und der Tragrollenmantel eine gemeinsame Mittelachse aufweisen. Weiter bevorzugt kann die Achse an ihren entgegengesetzten Enden jeweils eine Nabe aufweisen, mit welcher die Tragrolle bzw. die Achse in einer Fördervorrichtung befestigbar ist. Weiter bevorzugt ragt die Achse bzw. die Naben der Achse über den Tragrollenmantel hinaus. Bevorzugt weist jede der zumindest einen Dämpfungseinrichtung eine Achsdurchführungsöffnung auf, so daß die Achse sich durch den Tragrollenmantel und die zumindest eine Dämpfungseinrichtung hindurch erstrecken kann. Insbesondere ist der Durchmesser der Achsdurchführöffnung größer als der Durchmesser der Achse, so daß die Achse nicht in mechanischem Kontakt mit der zumindest einen Dämpfungseinrichtung ist. Vorteilhafterweise tritt dabei keine Reibung zwischen der Achse und er zumindest einen Dämpfungseinrichtung auf, wenn die Achse und der Tragrollenmantel relativ zueinander rotieren bzw. drehen.

Vorzugsweise legt die Achse einen vorbestimmten Anpreßdruck A an eine Achsdurchführöffnungsinnenfläche der Achsdurchführöffnung an. Damit die Achse einen vorbestimmten Anpreßdruck an die Innenfläche der Achsdurchführöffnung der zumindest einen Dämpfungseinrichtung anlegen kann, kontaktiert die Achse die zumindest eine Dämpfungseinrichtung im Bereich der Achsdurchführöffnung mechanisch. Um die Reibung zwischen der zumindest einen Dämpfungseinrichtung und der Achse, welche bei einer Rotation des Tragrollenmantels relativ zur Achse auftritt, zu vermindern, erfolgt der mechanische Kontakt zwischen der Achse und der zumindest einen Dämpfungseinrichtung bevorzugt über eine Gleitvorrichtung bzw. ein Gleitmittel. Eine bevorzugte Gleitvorrichtung, die zwischen der Achse und der zumindest einen Dämpfungseinrichtung angeordnet sein kann, ist beispielsweise ein Lager.

Vorzugsweise ist die zumindest eine Dämpfungseinrichtung im wesentlichen als Torus mit kreisförmigem, ovalem, dreieckigem, rechteckigem oder trapezförmigem Querschnitt ausgebildet. Mit anderen Worten kann die zumindest eine Dämpfungseinrichtung im wesentlichen ringförmig, insbesondere als geschlossener Ring, ausgebildet sein. Insbesondere ist die zumindest eine Dämpfungseinrichtung in Richtung des Mittelpunkts des Torus bzw. des Rings elastisch verformbar ausgebildet, so daß die zumindest eine Dämpfungseinrichtung vorteilhafterweise durch Pressen in dem Tragrollenmantel eingeführt und positioniert werden kann, wobei aufgrund der elastischen Verformung der zumindest einen Dämpfungseinrichtung der vorbestimmte Anpreßdruck P an die Tragrollenmantelinnenfläche erzeugbar ist. Weiter bevorzugt ist der Durchmesser der zumindest einen Dämpfungseinrichtung größer als die Erstreckung der zumindest einen Dämpfungseinrichtung entlang der Längsrichtung L. Weiter bevorzugt kann der Durchmesser der zumindest einen Dämpfungseinrichtung etwa um das 1,5fache, besonders bevorzugt um das Zweifache, insbesondere um das Dreifache, größer sein als die Erstreckung der zumindest einen Dämpfungseinrichtung entlang der Längsrichtung L. Abweichend von der Torusform bzw. der Ringform kann die zumindest eine Dämpfungseinrichtung eine Fase aufweisen, welche das Einführen der zumindest einen Dämpfungseinrichtung in dem Tragrollenmantel erleichtert. Mit anderen Worten ist die zumindest eine Dämpfungseinrichtung im Bereich der Fase im wesentlichen kegelstumpfförmig bzw. konisch ausgebildet, so daß die zumindest eine Dämpfungseinrichtung beim Herstellen der Tragrolle an den Tragrollenmantel in einfacher Weise angesetzt werden kann, um die Dämpfungseinrichtung in den Tragrollenmantel zu pressen.

Vorzugsweise ist die zumindest eine Dämpfungseinrichtung im wesentlichen als Hohlzylinder ausgebildet. Weiter bevorzugt kann die als Hohlzylinder ausgebildete Dämpfungseinrichtung einen Durchmesser aufweisen, der kleiner ist als die Längserstreckung des Hohlzylinders entlang der Längsrichtung L. Besonders bevorzugt weist die Tragrolle genau eine Dämpfungseinrichtung in Form eines Hohlzylinders auf, so daß vorteilhafterweise das Herstellen der Tragrolle besonders einfach ist. Es versteht sich, daß der Hohlzylinders zwecks leichterer Anordnung in bzw. an den Tragrollenmantel eine Fase, wie voranstehend beschrieben, aufweisen kann.

Vorzugsweise umfaßt die zumindest eine Dämpfungseinrichtung einen Schaumstoff und/oder einen Filz. Es versteht sich, daß der Schaumstoff sowohl ein offenporiger als auch ein geschlossenporiger Schaumstoff sein kann. Vorteilhafterweise können über die Betriebsdauer der Tragrolle keine Fluide in den geschlossenporigen Schaumstoff eindringen. Weiter versteht es sich, daß der Filz aus künstlichen oder aus natürlichen Fasern bestehen kann. Weiter bevorzugt umfaßt die zumindest eine Dämpfungseinrichtung innerhalb oder außerhalb des Schaumstoffs bzw. des Filzes zumindest ein Spannelement, welches rückstellfähig ausgebildet bzw. elastisch verformbar ist, wobei das Spannelement alternativ oder zusätzlich zu dem Schaumstoff und/oder dem Filz einen vorbestimmten Anpreßdruck P an die Tragrollenmantelinnenfläche anlegt. Das zumindest eine Spannelement kann beispielsweise in den Schaumstoff bzw. den Filz eingebettet sein. Beispielsweise kann das zumindest eine Spannelement als elastischer Ring aus Metall oder Kunststoff ausgebildet sein.

Vorzugsweise ist die zumindest eine Dämpfungseinrichtung einstückig ausgebildet. Insbesondere kann die zumindest eine Dämpfungseinrichtung als massiver Körper oder als Hohlkörper aus einem einzigen Material ausgebildet sein.

Vorzugsweise umfaßt die zumindest eine Dämpfungseinrichtung ein Polymer, ein Elastomer, ein Vulkanisat und/oder ein Plastomer. Es versteht sich, daß die zumindest eine Dämpfungseinrichtung einen Duroplasten, beispielsweise Melamin, Polyamid, Polyester, Polyurethan, usw. und/oder einen Thermoplasten, beispielsweise Polyethylen, Polyvinylchlorid usw., umfassen kann bzw. aus einem Duroplast bzw. Thermoplast bestehen kann. Besonders bevorzugt kann die zumindest eine Dämpfungseinrichtung ein Elastomer, wie beispielsweise ein Gummi oder ein Silikon, umfassen bzw. aus dem Elastomer bestehen.

Vorzugsweise ist die zumindest eine Dämpfungseinrichtung entlang der Längsrichtung L mittig zwischen den Endbereichen des Tragrollenmantels angeordnet. Mit anderen Worten weist die zumindest eine Dämpfungseinrichtung gegenüber beiden Endbereichen des Tragrollenmantels bzw. gegenüber beiden Lagerhalteeinrichtungen denselben Abstand auf. Besonders bevorzugt umfaßt die Tragrolle genau eine Dämpfungseinrichtung, welche mittig zwischen den Endbereichen des Tragrollenmantels angeordnet ist. Vorteilhafterweise ist die zumindest eine Dämpfungseinrichtung in diesem Fall an der Stelle des Tragrollenmantels angeordnet, an welcher bezüglich der Grundmode einer Eigenschwingung des Tragrollenmantels die größte Auslenkung bzw. Amplitude des Tragrollenmantels erwartet werden kann, so daß durch den vorbestimmten Anpreßdruck P, welcher durch die zumindest eine Dämpfungseinrichtung an den Tragrollenmantel angelegt wird, die Amplitude der Grundmode der Eigenschwingung vorteilhafterweise besonders effizient gedämpft wird. Insbesondere bei der Verwendung von Eisen oder Stahl als bevorzugtem Material des Tragrollenmantels ist zu erwarten, daß die Schwingung der Grundmode eine Frequenz in dem für den Menschen hörbaren Bereich aufweist, insbesondere in einem Bereich zwischen einem Kilohertz und etwa 10 Kilohertz liegt.

Vorzugsweise umfaßt die Tragrolle eine Mehrzahl von Dämpfungseinrichtungen, welche äquidistant mit einem Abstand Δx voneinander beabstandet entlang der Längsrichtung L angeordnet sind.

Vorzugsweise ist der Abstand Δx gleich einem Bruchteil $\dfrac{X}{N}$ der Länge X des Tragrollenmantels, wobei N eine natürliche Zahl mit N $\geq$ 2 ist. Vorteilhafterweise können durch die bevorzugte Anordnung der Mehrzahl von Dämpfungseinrichtungen neben der Grundmode, mit welcher der Tragrollenmantel schwingt, auch höhere Moden, das heißt Oberschwingungen der Grundmode, gedämpft werden. Weiter bevorzugt ist die Mehrzahl von Dämpfungseinrichtungen symmetrisch zur Mitte des Tragrollenmantels bezogen auf die Längsrichtung L angeordnet. Beispielsweise kann N gleich 2 gewählt sein, um die erste Mode der Eigenschwingung des Tragmantels zu dämpfen. Weiter beispielsweise kann N gleich 3 gewählt sein, um die zweite Mode der Eigenschwingung des Tragrollenmantels zu dämpfen, wobei vorteilhafterweise auch die Grundmode der Eigenschwingung gedämpft wird. Weiter bevorzugt kann N gleich 4 gewählt sein, um die dritte Mode der Eigenschwingung des Tragrollenmantels zu dämpfen. Weiter bevorzugt kann N gleich 5 gewählt sein, um die vierte Mode der Eigenschwingung des Tragrollenmantels zu dämpfen, wobei vorteilhafterweise ebenfalls die Grundmode gedämpft wird, da die mittlere Dämpfungseinrichtung entlang der Längsrichtung L mittig zwischen den Endbereichen des Tragrollenmantels angeordnet sein kann. Weiter bevorzugt kann N gleich 6 gewählt sein, um die fünfte Mode der Eigenschwingung des Tragrollenmantels zu dämpfen, wobei vorteilhafterweise auch die erste Mode der Eigenschwingung gedämpft wird, da zwei der sechs Dämpfungseinrichtungen der Konfiguration für N gleich 1 entsprechen. Es versteht sich, daß für N jede praktikable natürliche Zahl eingesetzt werden kann, welche derart ausgewählt wird, so daß die entsprechende Mode der Eigenschwingung des Tragrollenmantels gedämpft wird, welche sich im für den Menschen hörbaren Bereich befindet. Dabei zeichnet sich eine Hörmode dadurch aus, daß sie gegenüber der Grundmode eine N-fache Frequenz aufweist. Entsprechend weist die erste Mode gegenüber der Grundmode der Eigenschwingung des Tragrollenmantels eine doppelt so hohe Frequenz auf. Weiter beispielsweise weist die zweite Mode die dreifache Frequenz der Grundmode auf.

Vorzugsweise ist der Abstand zwischen zumindest einer der Dämpfungseinrichtungen und einem der Endbereiche gleich einem Bruchteil $\dfrac{X}{2N}$ der Länge X des Tragrollenmantels, wobei N eine natürliche Zahl mit N $\geq$ 2 ist. Weiter vorzugsweise ist der Abstand zwischen zumindest einer der Dämpfungseinrichtungen und beiden der Endbereiche gleich groß, so daß die Dämpfungseinrichtungen im wesentlichen gemäß einer spiegelsymmetrischen Anordnung bezogen auf die Mitte des Tragrollenmantels entlang der Längsrichtung L angeordnet sind. Vorteilhafterweise entspricht der Abstand zwischen einem der Endbereiche und der dem Endbereich nächstliegenden Dämpfungseinrichtung einem Viertel der Wellenlänge der entsprechenden Mode der Eigenschwingung des Tragrollenmantels, so daß jede der Dämpfungseinrichtungen vorteilhafterweise derart positioniert ist, daß die entsprechende Dämpfungseinrichtung in dem Bereich des Tragrollenmantels einen vorbestimmten Anpreßdruck P an die Tragrollenmantelinnenfläche anlegt, an welchem die maximale Amplitude der Eigenschwingung des Tragrollenmantels zu erwarten ist.

Vorzugsweise umfaßt die Tragrolle eine Mehrzahl von Dämpfungseinrichtungen, welche untereinander mittels zumindest einer Verbindungseinrichtung mechanisch verbunden sind. Vorteilhafterweise können die miteinander verbundenen Dämpfungseinrichtungen gleichzeitig gehandhabt und in bzw. an dem Tragrollenmantel angeordnet werden. Die bevorzugte Verbindungseinrichtung kann beispielsweise einen oder mehrere Verbindungsstege umfassen, welche aus dem gleichen Material gebildet sind, wie die Dämpfungseinrichtungen. Weiter bevorzugt kann die zumindest eine Verbindungseinrichtung eine starre Verbindung umfassen, beispielsweise zumindest einen starren Stab, welcher die Mehrzahl von Dämpfungseinrichtungen zumindest bereichsweise durchdringt und miteinander verbindet.

Vorzugsweise sind die Dämpfungseinrichtungen und die zumindest eine Verbindungseinrichtung einstückig ausgebildet. Beispielsweise können die Dämpfungseinrichtungen und die zumindest eine Verbindungseinrichtung aus einem Polymer oder einem Elastomer einstückig ausgebildet sein. Vorteilhafterweise können die Dämpfungseinrichtungen und die zumindest eine Verbindungseinrichtung durch Spritzgießen in einfacher Weise hergestellt sein.

Vorzugsweise ist der Tragrollenmantel mit der ersten Lagerhalteeinrichtung oder der zweiten Lagerhalteeinrichtung einstückig ausgebildet. Vorteilhafterweise muß lediglich die verbleibende Lagerhalteeinrichtung mit dem Tragrollenmantel verbunden werden, beispielsweise durch Verschweißen, Verschrauben, Vernieten, Verlöten, Vercrimpen usw., nachdem die zumindest eine Dämpfungseinrichtung innerhalb des Tragrollenmantels angeordnet wurde. Beispielsweise kann der Tragrollenmantel und die erste Lagerhalteeinrichtung durch Tiefziehen eines Metallrohlings ausgebildet sein. Weiter beispielsweise können der Tragrollenmantel und die erste Lagerhalteeinrichtung durch Spritzgießen oder Blasformen aus Kunststoff hergestellt sein. Es versteht sich, daß anstatt der ersten Lagerhalteeinrichtung auch die zweite Lagerhalteeinrichtung zusammen mit dem Tragrollenmantel einstückig ausgebildet sein kann.

Fördervorrichtung gemäß einem Aspekt

Ein Aspekt der vorliegenden Erfindung betrifft eine Fördervorrichtung mit zumindest einer erfindungsgemäßen Tragrolle. Bevorzugt wird die erfindungsgemäße Tragrolle mittels der Achse in einer Tragrollenaufnahme der Fördervorrichtung aufgenommen und fixiert. Bevorzugte Fördervorrichtungen können insbesondere Bandförderanlagen sein, wie sie beispielsweise zum Transport von Abraum, Erzen und/oder Kohle in Tagebauen oder unter Tage eingesetzt werden. Eine weitere bevorzugte Fördervorrichtung kann eine Mehrzahl von Tragrollen zum Transport von Stückgut, beispielsweise Pakete, Kisten, Gepäckstücke, Container oder ähnliches, umfassen, wobei zu transportierende Stückgut unmittelbar über die Tragrollen gefördert wird. Vorteilhafterweise weisen die erfindungsgemäßen Fördervorrichtungen aufgrund der Eigenschaften der Tragrollen eine geringe Schallemission auf, so daß vorteilhafterweise die Lärmbelästigung in der Umgebung der Fördervorrichtungen gemindert ist.

Figurenbeschreibung

Nachfolgend werden bevorzugte Ausführungsformen der vorliegenden Erfindung anhand begleitender Figuren beispielhaft beschrieben. Es zeigt:

Figur 1: eine Schnittansicht einer Ausführungsform einer Tragrolle, und
Figur 2: eine Schnittansicht einer weiteren Ausführungsform einer Tragrolle.

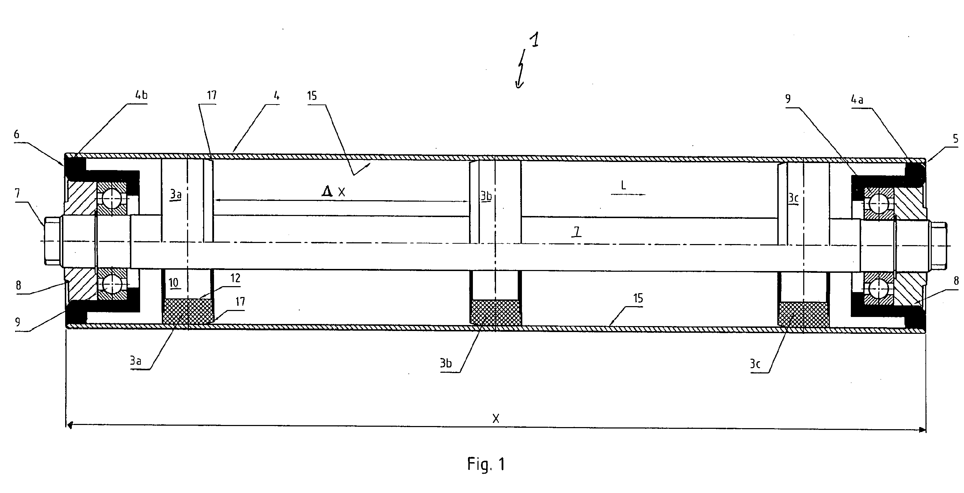

Figur 1 zeigt eine Schnittansicht einer Ausführungsform einer Tragrolle 1. Die Tragrolle 1 umfaßt einen zylindrischen Tragrollenmantel 4 mit einer Tragrollenmantelinnenfläche 15, wobei sich die Zylinderachse des Tragrollenmantels 4 im wesentlichen entlang der Längsrichtung L erstreckt. Innerhalb des Tragrollenmantels 4 sind drei Dämpfungseinrichtungen 3a, 3b, 3c angeordnet, wobei die mittlere der Dämpfungseinrichtungen 3b mittig bezüglich der Längsrichtung L innerhalb des Tragrollenmantels 4 angeordnet ist. Die Dämpfungseinrichtungen 3a, 3b, 3c legen an einer Kontaktfläche, an welcher ein mechanischer Kontakt zwischen der Tragrollenmantelinnenfläche 15 und den jeweiligen Dämpfungseinrichtungen 3a, 3b, 3c ausgebildet ist, einen vorbestimmten Anpreßdruck P an die Tragrollenmantelinnenfläche 15 bzw. an den Tragrollenmantel 4 an. Die drei Dämpfungseinrichtungen 3a, 3b, 3c können mit einem äquidistanten Abstand Δx zueinander angeordnet sein, wobei die Länge X des Tragrollenmantels 4 bevorzugt ein ganzzahliges Vielfaches des Abstandes Δx sein kann. Desweiteren weisen die Dämpfungseinrichtungen 3a, 3b, 3c jeweils eine Achsdurchführungsöffnung 10 auf, durch welche eine Achse 7 hindurchragt, welche sich entlang der Längsrichtung L erstreckt. Dabei ist der Durchmesser der Achsdurchführungsöffnung 10 größer als der Durchmesser der Achse 7 in dem Bereich, welcher innerhalb der Achsdurchführungsöffnung 10 angeordnet ist. Demzufolge stehen die Dämpfungseinrichtungen 3a, 3b, 3c an einer Achsdurchführungsöffnungsinnenfläche 12 der Achsdurchführungsöffnung 10 nicht in mechanischem Kontakt mit der Achse 7. Mit anderen Worten kann die Achse 7 relativ zu den Dämpfungseinrichtungen 3a, 3b, 3c im wesentlichen reibungsfrei rotieren. Bei betriebsgemäßem Gebrauch der Tragrolle 1 ist diese in einer Fördervorrichtung (nicht gezeigt) eingebaut, so daß die Achse 7 fest steht und der Tragrollenmantel 4 sowie die Dämpfungseinrichtungen 3a, 3b, 3c um die Achse 7 herum rotierbar sind.

Die Dämpfungseinrichtungen 3a, 3b, 3c sind in einer bevorzugten Ausführungsform als Torus mit im wesentlichen rechteckigen Querschnitt bzw. als Hohlzylinder ausgebildet, wobei der Durchmesser der Dämpfungseinrichtungen, welcher im wesentlichen dem Innendurchmesser des Tragrollenmantels entspricht, größer ist als die Längserstreckung der Dämpfungseinrichtungen entlang der Längsrichtung L. Bevorzugt können die hohlzylinderförmigen Dämpfungseinrichtungen 3a, 3b, 3c einstückig ausgebildet sein, insbesondere aus einem Elastomer bzw. einem Gummi bestehen. Weiter bevorzugt weist jede der Dämpfungseinrichtungen 3a, 3b, 3c ein zumindest einer Seite entlang der Längsrichtung L eine Fase 17 auf, so daß der Durchmesser der Dämpfungseinrichtung 3a, 3b, 3c im Bereich der Fase 17 vermindert ist. Insbesondere können die Dämpfungseinrichtungen 3a, 3b, 3c im Bereich der Fase 17 konisch zulaufen bzw. sich verjüngen. Vorteilhafterweise können die Dämpfungseinrichtungen 3a, 3b, 3c aufgrund der Fase 17 einfacher in den Tragrollenmantel 4 entlang der Längsrichtung L eingeführt werden.

Die in der Figur 1 gezeigte Tragrolle 1 weist ferner eine erste Lagerhalteeinrichtung 5 und eine zweite Lagerhalteeinrichtung 6 auf, die mit dem Tragrollenmantel 4 verbunden sind. In der bevorzugten Ausführungsform ist die erste Lagerhalteeinrichtung 5 an einem Endbereich 4a des Tragrollenmantels 4 angeordnet bzw. befestigt. Die zweite Lagerhalteeinrichtung 6 ist an einem dem Endbereich 4a entgegengesetzten Endbereich 4b des Tragrollenmantels angeordnet bzw. befestigt. Die Befestigung der Lagerhalteeinrichtungen 5,6 kann bevorzugt durch Verschweißen der Lagerhalteeinrichtungen 5, 6 mit dem Tragrollenmantel 4 erfolgen, wobei der Tragrollenmantel 4 sowie die Lagerhalteeinrichtungen 5, 6 bevorzugt jeweils aus einem Metall ausgebildet sind.

Die Lagerhalteeinrichtungen 5, 6 sind ausgelegt, um jeweils ein zugeordnetes Tragrollenlager 9 aufzunehmen. Bevorzugt kann das Tragrollenlager 9 durch eine Preßpassung oder durch ein Einschrumpfen mit der zugeordneten Lagerhalteeinrichtung 5, 6 verbunden bzw. daran befestigt sein. Die Achse 7 wird über die Tragrollenlager 9 und die Lagerhalteeinrichtungen 5, 6 rotierbar mit dem Tragrollenmantel 4 verbunden. Mit anderen Worten kann der Tragrollenmantel 4 bei betriebsgemäßem Gebrauch der Tragrolle 1 um die dann räumlich fixierte Achse 7 reibungsarm rotieren. Um die Tragrollenlager 9 vor äußeren Einflüssen zu schützen, ist jedem Tragrollenlager eine Dichtungseinrichtung 8 zugeordnet, welche zwischen der zugeordneten Lagerhalteeinrichtung 5, 6 und der Achse 7 angeordnet ist. Die Dichtungseinrichtung 8 umfaßt bevorzugt ein Dichtungslabyrinth, welches verhindert, daß Feuchtigkeit und/oder Partikel von dem Äußeren in das Tragrollenlager 9 gelangen.

Aufgrund der Anordnung der Dämpfungseinrichtungen 3a, 3b, 3c ist die in der Figur 1 gezeigte Tragrolle ausgelegt, insbesondere die Grundmode sowie die zweite Mode der Eigenschwingungen des Tragrollenmantels 4 zu dämpfen.

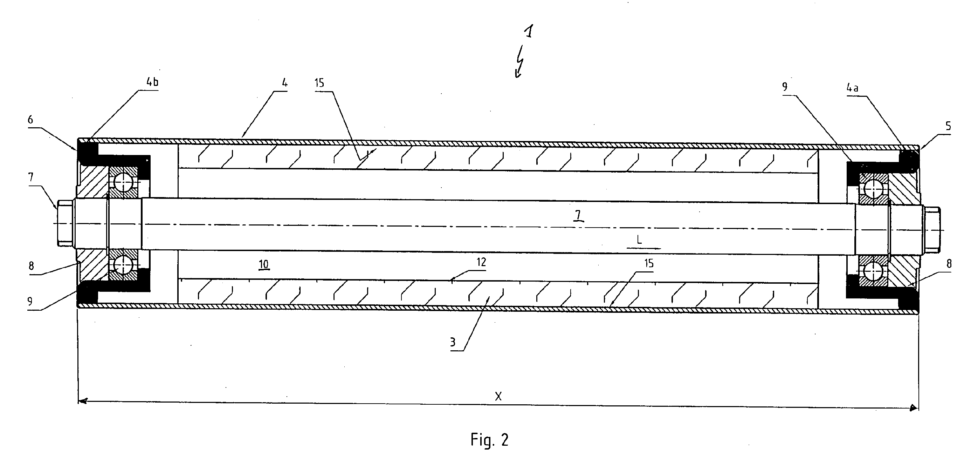

Figur 2 zeigt eine Schnittansicht einer weiteren Ausführungsform einer Tragrolle 1. Der Aufbau der Tragrolle 1, das heißt die Ausbildung und Anordnung des Tragrollenmantels 4, der ersten Lagerhalteeinrichtung 5, der zweiten Lagerhalteeinrichtung 6, der Achse 7, der Tragrollenlager 9 sowie der Dichtungseinrichtungen 8, entspricht dem Aufbau der in Figur 1 gezeigten Tragrolle, wobei die Merkmale, welche den in der Figur 1 gezeigten Merkmalen entsprechen, mit gleichen Bezugszeichen gekennzeichnet sind. Abweichend von der in der Figur 1 gezeigten Ausführungsform umfaßt die in der Figur 2 gezeigte Tragrolle 1 genau eine Dämpfungseinrichtung 3, welche bevorzugt aus einem Schaumstoff, einem Filz, einem Polymer oder einem Elastomer bestehen kann.

Der Durchmesser der Dämpfungseinrichtung 3 ist kleiner als die Erstreckung der Dämpfungseinrichtung entlang der Längsrichtung L. Die Dämpfungseinrichtung 3 ist als Hohlzylinder ausgebildet, welcher eine Achsdurchführöffnung 10 mit einer Achsdurchführöffnungsinnenfläche 12 aufweist, durch welche sich die Achse 7 hin entlang der Längsrichtung L hindurch erstrecken kann. Die Achse 7 und die Achsdurchführöffnungsinnenfläche 12 der Achsdurchführöffnung 10 treten dabei nicht in einen mechanischen Kontakt. Die Dämpfungseinrichtung 3 ist von der ersten und zweiten Lagerhalteeinrichtung 5, 6 beabstandet angeordnet. Mit anderen Worten kann die Dämpfungseinrichtung 3 beim Herstellen der Tragrolle 1 in einem Schritt in dem Tragrollenmantel 4 angeordnet werden, so daß in einem nachfolgenden Schritt die erste Lagerhalteeinrichtung 5 und/oder die zweite Lagerhalteeinrichtung 6 an dem Tragrollenmantel 4 angeordnet bzw. gefestigt werden kann, ohne daß die erste bzw. zweite Lagerhalteeinrichtung 5, 6 die Dämpfungseinrichtung 3 kontaktiert, um diese beispielsweise zu verschieben. Vorteilhafterweise liegt die Dämpfungseinrichtung 3 nicht vollflächig an der Tragrollenmantelinnenfläche 15 an, wodurch die Tragrolle 1 ein verringertes Gewicht und ein verringertes Trägheitsmoment aufweist.

Bezugiszeichenliste

| | |
|---|---|
| 1 | Tragrolle |
| 3; 3a, 3b, 3c | Dämpfungseinrichtung |
| 4 | Tragrollenmantel |
| 4a, 4b | Endbereiche des Tragrollenmantels 4 |
| 5 | erste Lagerhalteeinrichtung |
| 6 | zweite Lagerhalteeinrichtung |
| 7 | Achse |
| 8 | Dichtungseinrichtung |
| 9 | Tragrollenlager |
| 10 | Achsdurchführöffnung |
| 12 | Achsdurchführöffnungsinnenfläche |
| 15 | Tragrollenmantelinnenfläche |
| 17 | Fase |
| A | Anpreßdruck an die Achsdurchführöffnungsinnenfläche 12 |
| L | Längsrichtung |
| P | Anpreßdruck an die Tragrollenmantelinnenfläche 15 |
| Δx | Abstand zwischen zwei Dämpfungseinrichtungen 3; 3a, 3b, 3c |
| X | Länge des Tragrollenmantels 4 |

**Patentansprüche**

1. Tragrolle (1), insbesondere für Fördergurte, umfassend:

   - einen Tragrollenmantel (4) mit einer Tragrollenmantelinnenfläche (15);
   - eine erste Lagerhalteeinrichtung (5) und eine zweite Lagerhalteeinrichtung (6), welche an entlang einer Längsrichtung (L) voneinander beabstandeten Endbereichen (4a, 4b) des Tragrollenmantels (4) angeordnet sind;
   - zumindest eine Dämpfungseinrichtung (3; 3a, 3b, 3c), welche von der ersten und zweiten Lagerhalteeinrichtung (5, 6) beabstandet angeordnet ist und entlang der Längsrichtung (L) zumindest bereichsweise einen vorbestimmten Anpreßdruck (P) an die Tragrollenmantelinnenfläche (15) anlegt.

2. Tragrolle (1) nach Anspruch 1, weiter umfassend:

   - eine Achse (7), welche sich entlang der Längsrichtung (L) durch eine Achsdurchführöffnung (10) der zumindest einen Dämpfungseinrichtung (3; 3a, 3b, 3c) hindurch erstreckt, wobei die Achse (7) bevorzugt einen vorbestimmten Anpreßdruck (A) an eine Achsdurchführöffnungsinnenfläche (12) der Achsdurchführöffnung (10) anlegt.

3. Tragrolle (1) nach einem der vorigen Ansprüche, wobei die zumindest eine Dämpfungseinrichtung (3; 3a, 3b, 3c) im wesentlichen als Torus mit kreisförmigem, ovalem, dreieckigem, rechteckigem oder trapezförmigem Querschnitt ausgebildet ist.

4. Tragrolle (1) nach einem der vorigen Ansprüche, wobei die zumindest eine Dämpfungseinrichtung (3; 3a, 3b, 3c) im wesentlichen als Hohlzylinder ausgebildet ist.

5. Tragrolle (1) nach einem der vorigen Ansprüche, wobei die zumindest eine Dämpfungseinrichtung (3; 3a, 3b, 3c) einen Schaumstoff und/oder einen Filz umfaßt.

6. Tragrolle (1) nach einem der vorigen Ansprüche, wobei die zumindest eine Dämpfungseinrichtung (3; 3a, 3b, 3c) einstückig ausgebildet ist.

7. Tragrolle (1) nach einem der vorigen Ansprüche, wobei die zumindest eine Dämpfungseinrichtung (3; 3a, 3b, 3c) ein Polymer, ein Elastomer, ein Vulkanisat und/oder ein Plastomer umfaßt.

8. Tragrolle (1) nach einem der vorigen Ansprüche, wobei die zumindest eine Dämpfungseinrichtung (3; 3a, 3b, 3c) entlang der Längsrichtung (L) mittig zwischen den Endbereichen (4a, 4b) des Tragrollenmantels (4) angeordnet ist.

9. Tragrolle (1) nach einem der vorigen Ansprüche, mit einer Mehrzahl von Dämpfungseinrichtungen (3; 3a, 3b, 3c), welche äquidistant mit einem Abstand $\Delta x$ voneinander beabstandet entlang der Längsrichtung (L) angeordnet sind.

10. Tragrolle (1) nach Anspruch 9, wobei der Abstand $\Delta x$ gleich einem Bruchteil $\dfrac{X}{N}$ der Länge X des Tragrollenmantels (4) ist, wobei N eine natürliche Zahl mit $N \geq 2$ ist.

11. Tragrolle (1) nach Anspruch 9 oder 10, wobei der Abstand zwischen zumindest einer der Dämpfungseinrichtungen (3; 3a, 3b, 3c) und einem der Endbereiche (4a, 4b) gleich einem Bruchteil $\dfrac{X}{2N}$ der Länge X des Tragrollenmantels (4) ist, wobei N eine natürliche Zahl mit $N \geq 2$ ist.

12. Tragrolle (1) nach einem der vorigen Ansprüche, mit einer Mehrzahl von Dämpfungseinrichtungen (3; 3a, 3b, 3c), welche untereinander mittels zumindest einer Verbindungseinrichtung mechanisch verbunden sind, wobei die Dämpfungseinrichtungen (3; 3a, 3b, 3c) und die zumindest eine Verbindungseinrichtung bevorzugt zusammen einstückig ausgebildet sind.

13. Tragrolle (1) nach einem der vorigen Ansprüche, wobei der Tragrollenmantel (4) mit der ersten Lagerhalteeinrichtung (5) oder der zweiten Lagerhalteeinrichtung (6) einstückig ausgebildet ist.

14. Tragrolle (1) nach einem der vorigen Ansprüche, wobei die zumindest eine Dämpfungseinrichtung (3; 3a, 3b, 3c) flexibler als der Tragrollenmantel (4) ist.

15. Fördervorrichtung mit zumindest einer Tragrolle (1) gemäß einem der Ansprüche 1 bis 14.

Fig. 1

Fig. 2

| | Europäisches Patentamt / European Patent Office / Office européen des brevets | **EUROPÄISCHER RECHERCHENBERICHT** | **Nummer der Anmeldung** EP 11 00 4041 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2009/095524 A1 (METSO MINERALS INC [FI]; KATAJISTO HARRI [FI]; LAHTOMAEKI RIINA [FI];) 6. August 2009 (2009-08-06) * Seite 5, Absatz 3; Abbildung 1 * ----- | 1-3,5, 8-15 | INV. B65G39/06 |
| X | DE 22 21 720 A1 (PRECISMECA GMBH) 15. November 1973 (1973-11-15) * das ganze Dokument * ----- | 1,4-6,8, 13-15 | |
| X | DE 20 2009 012644 U1 (ARTUR KUEPPER GMBH & CO KG [DE]) 10. Dezember 2009 (2009-12-10) * das ganze Dokument * ----- | 1,3,4, 6-8,14, 15 | |
| X | US 5 381 887 A (EMMONS ORLIN W [US]) 17. Januar 1995 (1995-01-17) * das ganze Dokument * ----- | 1-5, 7-11,14, 15 | |
| X | DE 19 31 569 A1 (ROBOTRON VEB K) 24. September 1970 (1970-09-24) * das ganze Dokument * ----- | 1-3, 7-11,14, 15 | RECHERCHIERTE SACHGEBIETE (IPC) B65G |
| X | DE 32 05 061 A1 (LACHMANN HANS PETER DR ING [DE]) 18. August 1983 (1983-08-18) * das ganze Dokument * ----- | 1,2, 7-12,14, 15 | |
| X | US 5 803 235 A (MCGINNIS HERBERT E [US] ET AL) 8. September 1998 (1998-09-08) * das ganze Dokument * ----- | 1-3,7-9, 14,15 | |
| X | DE 33 45 368 A1 (MANNESMANN AG [DE]) 27. Juni 1985 (1985-06-27) * das ganze Dokument * ----- -/-- | 1,3,6-8, 13-15 | |

Der vorliegende Recherchenbericht wurde für alle Patentansprüche erstellt

| Recherchenort | Abschlußdatum der Recherche | Prüfer |
|---|---|---|
| Den Haag | 24. Juni 2011 | Schneider, Emmanuel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

| | Europäisches Patentamt<br>European Patent Office<br>Office européen des brevets | **EUROPÄISCHER RECHERCHENBERICHT** | **Nummer der Anmeldung**<br>EP 11 00 4041 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 063 419 A (AEROFOAM IND PTY)<br>3. Juni 1981 (1981-06-03)<br>* das ganze Dokument *<br>----- | 1,2,4-6,<br>8,14,15 | |
| X | JP 10 279046 A (NIPPON MEKTRON KK)<br>20. Oktober 1998 (1998-10-20)<br>* das ganze Dokument *<br>----- | 1-6,8,<br>13-15 | |
| X | DE 32 05 609 A1 (CLOUTH GUMMIWERKE AG [DE]) 25. August 1983 (1983-08-25)<br><br>* das ganze Dokument *<br>----- | 1-4,<br>7-10,14,<br>15 | |
| X | DE 202 12 872 U1 (OTOLSKI FOERDERTECHNIK GMBH [DE]) 27. Februar 2003 (2003-02-27)<br>* das ganze Dokument *<br>----- | 1-3,7-9,<br>12,14,15 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 24. Juni 2011 | Schneider, Emmanuel |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**　　　　EP 11 00 4041

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-06-2011

| Im Recherchenbericht angeführtes Patentdokument | Datum der Veröffentlichung | Mitglied(er) der Patentfamilie | Datum der Veröffentlichung |
|---|---|---|---|
| WO 2009095524 A1 | 06-08-2009 | KEINE | |
| DE 2221720 A1 | 15-11-1973 | KEINE | |
| DE 202009012644 U1 | 10-12-2009 | EP 2298672 A2 | 23-03-2011 |
| US 5381887 A | 17-01-1995 | CA 2127349 A1 | 13-07-1995 |
| DE 1931569 A1 | 24-09-1970 | KEINE | |
| DE 3205061 A1 | 18-08-1983 | KEINE | |
| US 5803235 A | 08-09-1998 | KEINE | |
| DE 3345368 A1 | 27-06-1985 | KEINE | |
| GB 2063419 A | 03-06-1981 | AU 539072 B2 | 13-09-1984 |
| | | CA 1147692 A1 | 07-06-1983 |
| | | DE 3041126 A1 | 14-05-1981 |
| | | US 4440295 A | 03-04-1984 |
| | | ZW 26180 A1 | 21-01-1981 |
| JP 10279046 A | 20-10-1998 | KEINE | |
| DE 3205609 A1 | 25-08-1983 | KEINE | |
| DE 20212872 U1 | 27-02-2003 | KEINE | |

EPO FORM P0461

Für nähere Einzelheiten zu diesem Anhang : siehe Amtsblatt des Europäischen Patentamts, Nr.12/82